# EUROPEAN PATENT APPLICATION

(11) **EP 2 583 777 A1**
(43) Date of publication of application: **24.04.2013**
(21) Application number: 12185456.6
(22) Date of filing: 21.09.2012
(51) Int. Cl.: B23D 57/00

(54) **Clamping assembly for a wire guide of a wire saw**

(30) Priority: 22.10.2011 US 201161550389 P
(71) Applicant: Applied Materials Switzerland Sàrl, 1033 Cheseaux-sur-Lausanne (CH)
(72) Inventor: Schmid, Andreas, 3280 Meyriez (CH); Mercay, Guillaume, 1008 Prilly (CH); Mittaz, Alexandre, 3963 Crans-Montana (CH)
(74) Representative: Zimmermann & Partner

(57) **Abstract**

A clamping assembly for connecting to a cylindrical wire guide (321) of a wire saw for cutting wafers is disclosed. A shaft-side connector (50, 502, 505) is disclosed, and is adapted to connect to a shaft of a wire saw, the shaft having an axis of rotation (10). The shaft-side connector (50, 502, 505) comprises an outer surface (30) which is normal to the axis and adapted to abut a complementary outer surface (31) of a complementary connector(51, 503, 504) of the wire guide (321). A conical surface (40) lies between the outer surface (30) and the axis (10), the conical surface (40) being disposed symmetrically about the axis (10), and adapted to abut a complementary surface (41) of the wire guide (321).

## Description

### FIELD OF THE PRESENT DISCLOSURE

Embodiments of the present disclosure relate to a wire saw, a wire guide, and a clamping assembly for a wire guide of a wire saw. The present disclosure particularly relates to a wire saw for photovoltaic and/or semiconductor applications, a wire guide, and a clamping assembly for a wire guide of a wire saw for photovoltaics and/or semiconductors.

### BACKGROUND OF THE PRESENT DISCLOSURE

Wire saws are used in the photovoltaic and/or semiconductor industry, wherein for both applications semiconductors or semiconductor material is cut with a wire saw device. For example, wire saws cut semiconductor workpieces into shapes amenable for further processing, for example cutting silicon ingots into wafers, bricks, or squares.

For numerous applications, wafers, or slices, are of a very small thickness relative to the cross-section, or diameter, of the ingot. The wafers thus have a substantial flexibility and can flex and curve to come into contact with adjacent slices. This flexing is undesirable for precision and flatness of cutting and can give rise to undulations, striations and undesirable irregularities on the surface of the sawed slices. These irregularities, even of several micrometers, are enough to render the slices unusable for certain applications, such as for many solar and semiconductor applications. The deformations of the slices can even lead to micro ruptures and ruptures, especially near the coupling point where the slices are connected to their support.

A problem in the art of wafering semiconductor ingots is how to maintain uniform thin slices without irregularities. This problem translates into providing for the stability of the cutting element, i.e. the wire, and/or the wire guide, which influences the position of the cutting element, i.e. the wire.

The economic competitiveness of semiconductor material manufacturing is influenced by many parameters, for example the speed of throughput, which is naturally adversely affected by operational downtime, such as the time to replace components of the wire saw and maintenance time. In particular, the time required to replace a used wire and/or wire guide for a fresh one adversely affects throughput. Positional stability of the wire, wire web, and/or wire guide is also required to result in desired thicknesses and uniformity of thicknesses of cut pieces, particularly wafers. It is desirable to produce uniformly thin wafers, free of deformations and defects.

A problem in the art is that of how to design a wire guide clamping assembly that allows for precise control and stability of the position of the wire, wire web, and/or wire guide (so that uniformly thin wafers are made), yet also allows for rapid replacement of components such as the wire and/or wire guide (so that downtime is reduced).

Some additional/alternative problems are: to decrease the cost of ownership for substrate fabrication equipment such as wire saws and their components (e.g. having low cost equipment, low cost consumables, high system throughput, high machine up-time); to increase the area processed per process cycle (e.g., reduce processing per Wp); and to maintain high quality product (e.g. uniform thickness, free of defects). Therefore, there is a need to cost effectively form and manufacture thin semiconductor substrates, particularly for solar cell applications.

Wire guides, which are generally cylindrical and rotate about the cylinder axis, are sometimes referred to as rollers, cylinders, and wire guide cylinders.

### SUMMARY

An embodiment provides a clamping assembly for connecting to a cylindrical wire guide of a wire saw for cutting wafers, including a shaft-side connector, adapted to connect to a shaft of a wire saw, the shaft having an axis of rotation. The shaft-side connector includes an outer surface which is normal to the axis and adapted to abut a complementary outer surface of a complementary connector of the wire guide; and a conical surface between the outer surface and the axis, the conical surface being disposed symmetrically about the axis, and adapted to abut a complementary surface of the wire guide.

The term "wafer" as used herein refers to a semiconductor or photovoltaics wafer.

According to another embodiment, a clamping assembly for connecting a cylindrical wire guide to a shaft of a wire saw is disclosed, the wire saw adapted to cut wafers. The shaft has an axis of rotation. The clamping assembly includes an outer surface which is normal to the axis and adapted to abut a complementary outer surface of a complementary connector of the shaft; and a conical surface between the outer surface and the axis, the conical surface being disposed symmetrically about the axis, and adapted to abut a complementary surface of the complementary connector.

According to another embodiment, a clamping assembly for connecting to a cylindrical wire guide of a wire saw for cutting wafers is disclosed. The clamping assembly includes a shaft which has an axis of rotation, the shaft connected directly or indirectly to a shaft-side connector. The shaft-side connector includes an outer face which is normal to the axis and adapted to abut a complementary outer face of a complementary connector of the wire guide, and a conical face between the outer face and the axis, the conical face being disposed symmetrically about the axis, and adapted to abut a complementary face of the wire guide.

Further advantages, features, aspects and details are apparent from the dependent claims, the description and the drawings.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present disclosure can be understood in detail, a more particular description, briefly summarized above, may be had by reference to embodiments. The accompanying drawings relate to embodiments are described in the following:

Fig. 1 shows a wire guide and clamping assembly of a wire saw, according to embodiments described herein;

Fig. 2 shows a wire guide and clamping assembly of a wire saw, according to embodiments described herein;

Fig. 3 shows a portion of a wire guide and clamping assembly, according to embodiments described herein;

Fig. 4 shows a portion of a wire guide and clamping assembly, according to embodiments described herein;

Fig. 5 shows a portion of a wire guide and clamping assembly, according to embodiments described herein;

Fig. 6 shows views of a connector, according to embodiments described herein;

Fig. 7 shows views of a connector, according to embodiments described herein;

Fig. 8 shows a view of a connector, according to embodiments described herein;

Fig. 9 shows a view of a connector, according to embodiments described herein;

Fig. 10 shows a wire guide and clamping assembly of a wire saw, according to embodiments described herein;

Fig. 11 shows a wire guide and clamping assembly of a wire saw, according to embodiments described herein;

Fig. 12 shows a portion of a wire guide and clamping assembly, according to embodiments described herein;

Fig. 13 shows a wire guide and clamping assembly of a wire saw, according to embodiments described herein;

Fig. 14 shows a clamping assembly in a wire saw, according to embodiments described herein;

Fig. 15 is an isometric view of a wafer sawing system according to embodiments described herein;

Fig. 16 is an isometric view of a robotic device that may be used in the wafer sawing system according to embodiments described herein; and

Fig. 17 is an isometric view of a wafer sawing system according to embodiments described herein.

### DETAILED DESCRIPTION

Reference will now be made in detail to the various embodiments, one or more examples of which are illustrated in the figures. Each example is provided by way of explanation and is not meant as a limitation. Further, features illustrated or described as part of one embodiment can be used on or in conjunction with other embodiments to yield yet a further embodiment. It is intended that the description includes such modifications and variations.

Herein, "wire saw", "wire saw device", "wire sawing device", and "wire cutting device" are used interchangeably. Herein, the terms "sawing" and "cutting" are used interchangeably; and "wafer-cutting wire saw" and "waferer" are used interchangeably. Herein, an "ingot" may comprise one or more separate semiconductor pieces, for example a plurality of semiconductor pieces. Herein "ingot" is used broadly to signify at least one larger piece, or un-cut element, that is to be sawed in the wafer sawing. Herein, "semiconductor" refers to semiconductor materials such as those used in the photovoltaics industry.

Herein, "wire guide cylinder", "guide cylinder", and "cylindrical wire guide" are used interchangeably.

Herein, a wire saw can be used to form different types of substrates, or wafers, such as solar cell substrates, semiconductor substrates, or other useful substrates from a larger piece, such as an ingot, boule, or block.

Herein, "bearing" is used to mean a machine, component, or structural part that supports another part. Alternatively or additionally, a "bearing" is a support, guide, or locating piece for a rotating (or reciprocating) mechanical part. In yet another aspect, a "bearing" is a machine element that allows one part to bear (support) another. Herein, "bearing" and "connector" may be used synonymously.

Herein "outer" and "inner" may be used to convey axial directions, and in this context, typically "inner" refers to a direction toward the center of a component and "outer" typically refers to away from the center of the component.

In an exemplary context, "inner" and "outer" are used when referring to different connectors, such as complementary "inner" and "outer" connectors (e.g. wire guide side and shaft side connectors), which are inner and outer with respect to the center of the wire guide.

In another context used herein, "inner" and "outer" can be used to convey radial directions, particularly directions perpendicular to the axial direction of the cylindrical wire guide axis. In an exemplary context, "inner" and "outer" surface are used when referring to different surfaces of a connector, such as an inner conical surface (or conical surface between the axis and outer surface) of a connector and an outer surface (for example a surface located between an inner conical surface and a radially outer edge) of a connector.

Herein "conical" can refer to: a cone shaped structure; and/or a frustum cone shaped structure, which may or not be hollow. Furthermore "conical" can also refer to a generally cone shaped structure formed by segments of a cone, especially segments formed by longitudinal segments of a cone or frustum cone (longitudinal segments in the sense that the cone segments are cut from a cone along a plane parallel to the symmetry axis of the cone).

Herein, "connectors" are generally components of a clamping assembly for a wire saw for connecting a cylindrical wire guide to a wire saw, or vice versa, i.e. for connecting the wire saw, particularly a shaft of the wire saw, to a cylindrical wire guide.

As a matter of clarity, a conical section as used herein is not to be confused with a conic section which typically defines a two dimensional curve; rather a conical section, herein, has a three dimensional form. For example, the geometrical form of a conical section, as used herein, can be formed by cutting a solid or hollow cone by a plane oriented parallel to the cone axis. For example two conical sections can be formed by one cut through the center of the cone. Three can be formed by three cuts, e.g. at 120 degrees, each cut going through half the cone, and each cut meeting at the axis of the cone.

Typically, in a wire saw, a wire (or wires) is guided by at least one wire guide which rotates and causes/allows the movement of the wire, the movement being substantially along the length of the wire. Typically, a guide cylinder is supported by one or more bearings, which may be coupled to a wire tensioning system that is adapted to provide a desired tension to the wire(s) by moving at least one of the wire guides relative to the other.

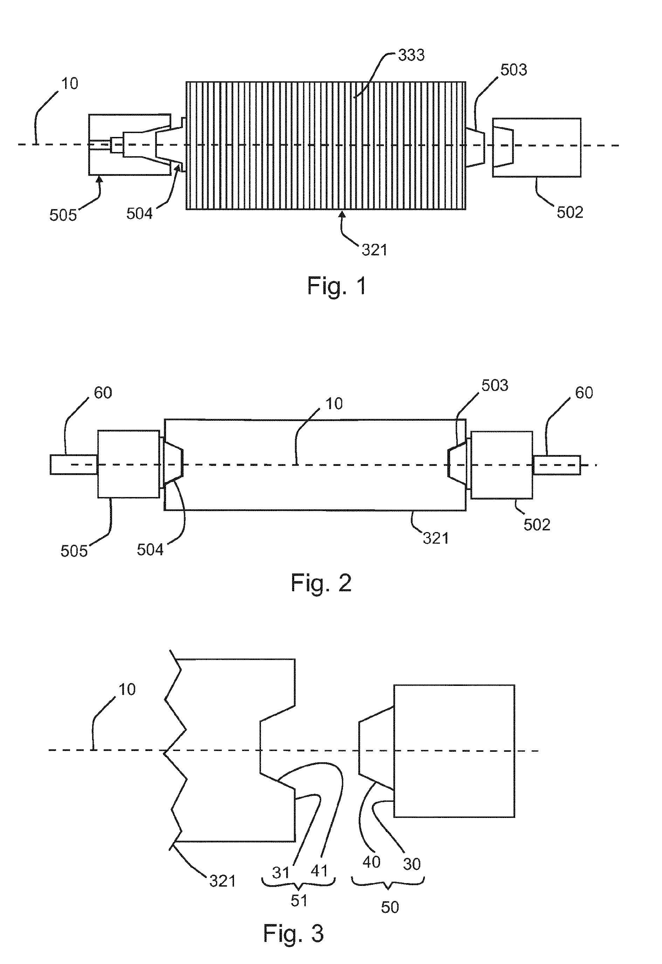

Fig. 1 illustrates a side view of a wire guide 321 that is configured to be rapidly replaced, for example during maintenance activities, according to an embodiment described herein. Typically, a wire guide 321 has grooves 333 which may define the pitch between adjacent wires of a layer of wires, for example the distance from the center of one wire to its nearest (two) neighbor(s) in a wire web. During cutting, for example, the wire guide 321 rotates about the axis 10, and the wire movement is partly on the rotating surface of the wire guide 321, i.e. along the grooves 333 of the wire guide 321. Typically about 1500 grooves are on the wire guide 321, for example 2000 or more grooves.

The wire guide is adapted for cutting wafers that are from about 0.02 mm through 0.4 mm thick , or from about 0 0.05 through about 0.2 mm thick, or from about 0.1 mm through about 0.15 mm thick, for example about 0.1 mm thick, or about 0.15 mm thick. The wire and/or wire guide 321 can become worn or damaged through use, so the wire and/or wire guide 321 is occasionally and/or regularly replaced and/or subjected to maintenance, which temporarily can halt wafer cutting. It is desirable to minimize the time of replacement of the wire and/or wire guide, to maximize throughput.

In an embodiment, a wire guide containing assembly includes a wire guide 321, a shaft side connector 502 that is adapted to mate with a wire guide side connector 503 on the wire guide 321, and a second shaft side connector 505 that is adapted to mate with a second wire guide side connector 504 on the wire guide 321. The wire guide side connectors 503, 504 may be integral to the wire guide, formed on the wire guide and/or attached to the wire guide. The shaft side connectors may be formed on and/or attachable to a respective shaft, bearing box shaft, bearing box, axle, rotating member, or the like; herein generally referred to as shaft, which is rotatable about an axis of rotation 10. One or both of the shaft side connectors may be attached to a respective shaft, the same shaft, and/or shaft assembly. The axis of rotation 10 coincides with a symmetry axis of the wire guide 321 and connectors, and/or the clamping assembly which optionally includes the wire guide and/or shaft.

Fig. 1 illustrates a disconnected configuration of a wire guide containing assembly, e.g. the wire guide 321 is disengaged and the complementary connector pairs (502 and 503) and (504 and 505) do not abut. A disconnected and/or partially disconnected configuration in which only one of the complementary connector pairs do not abut is also contemplated.

Generally, shaft side connectors 502 and 505 may be referred to as "outer connectors" or "connectors". Also generally, the wire guide side connectors 503 and 504 may be referred to as "inner connectors" or "connectors". In the embodiment shown in Fig. 2, the shaft side connectors are female and the wire guide side connectors are male. Other arrangements are also contemplated (e.g. in Fig. 1, the shaft side connectors are male and the wire guide side connectors are female).

Particularly in the case of a clamping system including a hydraulic system as a holding mechanism and/or automated clamping, the shaft side connectors 502 and 505 can be female. An advantage of the shaft side connectors 502 and 505 being female is that a shorter distance between the connector and a bearing (for example a bearing on the shaft that may connect the shaft to a motor and/or frame) is possible; consequently, the radial load is closer to the bearing, leading to a longer bearing life time.

In the case of a holding mechanism that includes a central tensioning screw, for example a manual clamping or manual holding mechanism, the shaft side connector can also be male.

It is apparent, in comparing Fig. 1 and 2, that at least one of the shaft side connectors 502 and/or 505 is movable axially with respect to the other, so that the wire guide 321 can be connected and disconnected, and/or engaged and disengaged. Due to the position, shape, and type of the connectors, the wire guide can be rapidly replaced, for example when it is worn out.

Fig. 2 illustrates a wire guide and clamping assembly of a wire saw, according to embodiments described herein. Fig. 2 also illustrates, in comparison to Fig. 1, an alternate pairing of the connectors, with the shaft side connectors 502 and 505 being male connectors and the wire guide side connectors 503 and 504 being female. Generally, complementary pairs of connectors are adapted to abut, and/or mate. Fig. 2 illustrates, according to an embodiment, a connected configuration of the wire guide containing assembly, e.g. the wire guide 321 is engaged and two sets of complementary connector pairs (502 and 503) and (504 and 505) mate, i.e. abut. As a matter of terminology, generally, when one of a complementary pair is referred to as a connector, then the other may be referred to as a complementary connector. Herein, "complementary connector" is synonymous with "complementary bearing", "counter bearing", and the like.

It is contemplated, generally, that given a shaft side connector such as connector 502 and/or 505, the complementary connector 503 and/or 504 may be a component of the wire guide 321. Moreover, the complementary connector 503 and/or 504 may also be a surface, e.g. a surface of the wire guide. Alternatively, the connector 503 and/or 504 may be a separate connector, connectable to each of the wire guide 321 and the connector 502 and/or 505, respectively. In an embodiment which may be combined with any other embodiment, the shaft 60 illustrated in Fig. 2 may be regarded as a component of the wire saw, and/or is a component of the clamping assembly; furthermore the shaft 60 may be regarded as a single shaft, or a plurality of shafts such as a pair of shafts, e.g. a motor side shaft and a freely rotating shaft. In an embodiment which may be combined with any other embodiment, the shaft may extend through wire guide 321, e.g. through the center of the wire guide 321.

Fig. 3 shows a connector 50 according to embodiments described herein. For example, the connector 50 is at least part of a clamping assembly for connecting to a cylindrical wire guide 321 of a wire saw for cutting semiconductor ingots, for example making wafers. The connector 50 includes an outer surface 30 (outer being a direction pointing away from the center of the connector 50) which is at least substantially normal to the axis 10, i.e. the outer surface 30 faces the wire guide 321. The outer surface is adapted to abut a complementary outer surface 31 of a complementary connector 51 and/or complementary surface of the wire guide 321. Typically the complementary outer surface 31 is also at least substantially normal to the axis 10, and faces the shaft side connector 50. When connected, a load and/or force can be transmitted through the contact made by the outer and complementary outer surfaces 30, 31. The outer surface 30 and/or complementary outer surface 31 may be referred to as a crown contact face, especially when in contact to its complementary surface.

In a connected configuration, according to an embodiment, an axially directed load can be transmitted through the outer surfaces 30, 31, i.e. the crown contact face. Transmitting the axial load through the outer surfaces 30, 31 (i.e. the complementary outer surfaces 30, 31) improves the axial support of the wire guide 321. Furthermore, improved axial support increases the stability of the wire guide and enhances alignment stability and precision of the position of the wire and/or wire web. In an embodiment, radially directed loads are not transmitted through the outer surfaces 30, 31, i.e. exclusively axial loads are transmitted through the outer surfaces 30, 31 which are substantially normal to the axis 10.

In an embodiment, the outer surface 30 is at a shorter radial distance from the axis than the grooved surface of the wire guide. The outer surface is parallel to the plane of rotation (normal to the axis of rotation 10), which can result in nearly exclusively axial contact forces arising between the outer surface 30 and its complementary outer surface 31.

In an embodiment, the connector 50 has a conical surface 40 between the outer surface 30 and the axis 10 (in other words the outer surface 30 is arranged at a greater radial distance from the axis than the conical surface is). The conical surface 40 is adapted to abut, e.g. mate with, a complementary surface 41 of the complementary connector 51 and/or wire guide 321, particularly in an engaged or connected configuration. In an embodiment, in a connected configuration, radially and axially directed loads are transmitted through the conical surface 40 and the complementary surface 41, particularly a complementary conical surface. An aspect of having the conical surface between the outer surface 30 and the axis 10, according to an embodiment, is that the outer surface 30 transmits mainly or even exclusively axial loads at greater radial distance from the axis 10. This can improve the axial support of the wire guide, particularly in comparison to clamping assemblies for wire guides which utilize a swivel joint.

For example, the outer surface 30 of the connector 50 and complementary outer surface 31 abut when in a connected configuration. Due to the abutment, particularly of the outer surfaces 30 and 31, the axial position of the wire guide 321 (particularly the wires that are guided by the grooves of the wire guide) is precisely controlled and/or known, particularly in regard to the axial position of the wire guide and/or wire(s). Consequently, for instance, more uniform wafers can be cut.

In an embodiment which may be combined with any other embodiment, the conical surface 40 is disposed symmetrically about the axis 10. In another embodiment which may be combined with any other embodiment, the connector 50 is hollow. In yet another embodiment which may be combined with any other embodiment, the outer surface 30 is annularly shaped, whether a continuously annular shape or one comprising segments of a ring. Segments may allow for some expansion and contraction of the connector due for example to heating/cooling, while minimizing damage to the connector and/or its complement. In yet another embodiment which may be combined with any other embodiment, the outer surface 30 is adjacent to the conical surface 40. In an embodiment which may be combined with any other embodiment, the outer surface is a planar surface, particularly one normal to the axis 10. A planar outer surface can, for instance, improve axial support of the wire guide, particularly in comparison to wire guides supported by swivel joints. Thus a connector and/or connecting assembly without a swivel joint is contemplated.

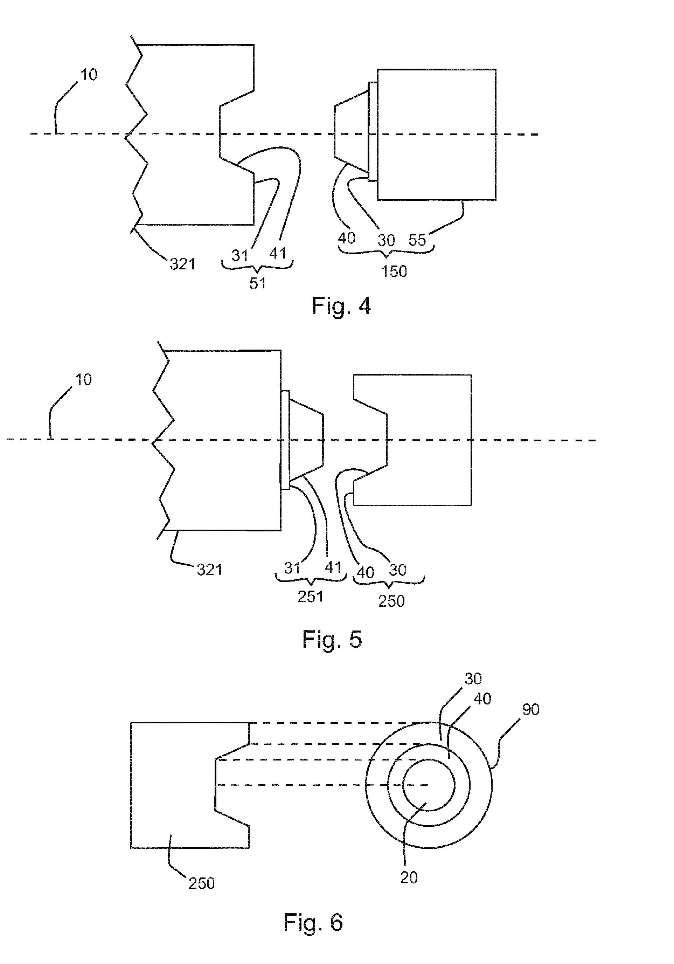

Fig. 4 illustrates a connector 150 according to an embodiment which may be combined with any other embodiments described herein. The outer surface 30, which is substantially normal to the axis 10, is on a component of the connector 50 other than the main body 55, e.g. the outer surface 30 is an annular ring or multiple arc-shaped components together forming a ring. According to an embodiment, the outer surface 30 is a smooth and/or unruffled surface.

According to an embodiment, which may be combined with any other embodiment, the conical surface 40 can include a deformable/flexible material and/or layer of deformable/flexible material. Materials can be, for example, steel alloys, such as those with a good surface hardness, ceramics, and/or carbon fiber reinforced polymer (CFRP), and combinations thereof. A conical surface 40 which has a deformable material can result in more intimate contact between the complementary connectors in a connected configuration. At least one of increased axial and radial support of the wire guide 321 is achieved. For example, a soft, i.e. deformable, conical surface 40 may allow more intimate contact of the outer surface 30 with the complementary outer surface 31.

Generally, and not limited to the embodiment of Fig. 4, the connector 150, particularly the space opposite to the wire guide behind the conical surface, can be hollow, which can increase the deformability of the conical surface. However, substantially or fully solid connectors are also contemplated, particularly those using a deformable and/or flexible material.

Fig. 5 illustrates the connector 250 and the wire guide 321 according to an embodiment in which the shaft side connector 250 is female and the wire side connector, or complementary connector, 251 is male.

Optionally, in an embodiment which can be combined with any other embodiment, the conical surface of the male connector is at least slightly bigger than the complementary surface, particularly the complementary conical surface of the female connector. A slightly bigger male connector, in some embodiments, improves contact between complementary surfaces, particularly complementary conical surfaces. In this context, a slightly bigger male connector means that the maximum diameter of the conical surface (in a direction taken parallel to the outer surface 30) of the male connector is from about 0.001% to about 0.01% larger than the maximum diameter of the complementary surface of the complementary (female) connector, or from about 0.003% through about 0.005% larger.

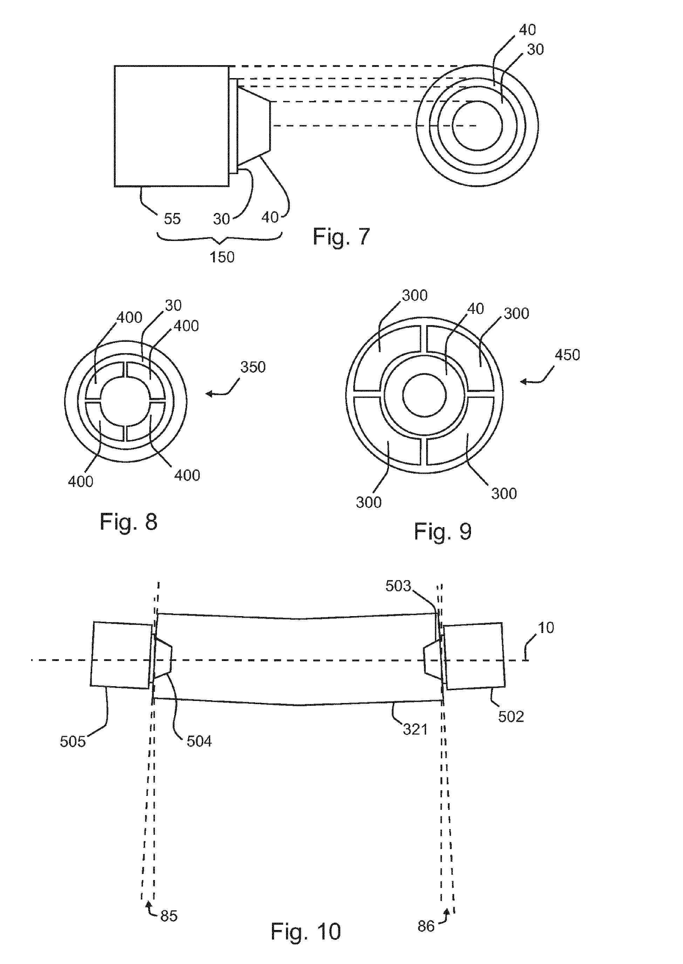

Fig. 6 illustrates views of a connector 250, according to an embodiment. In an embodiment, a portion of the outer surface 30, which in the connected configuration abuts the complementary outer surface 31, is at a relatively high radial distance from the axis, such as from about 2/3 of the radial distance from the axis 10 to the radial edge 90 of the connector 50. Typically, a conical surface 40 lies between the outer surface 30 and the axis 10. Optionally, a central surface 20 intersects the axis 10, and may be normal to the axis, and may also be adapted to abut a complementary central surface of a complementary connector. Both female (such as illustrated in the embodiments explained in view of Fig. 6) and male (such as illustrated in the embodiments explained in view of Fig. 7) type connectors are envisaged.

In an embodiment, a portion of the outer surface 30, for instance the radially innermost or outermost portion thereof, may be from about 65%, 70%, 75%, and/or 80% of the distance from the axis 10 to the radial edge 90 of the connector 250. The outer surface 30, particularly its placement as described, can enhance the stability of the wire guide. For example, the outer surface 30, located between the radial edge 90 of the connector 250 and the conical surface 40, can minimize and/or prevent bending of the wire guide 321 depicted in Fig. 10, (i.e. the bending angles 85, 86). Consequently, for instance, more uniform wafers can be cut, there is a decreased risk of wire breakage, and/or the wear rate on components such as the wire guide 321 is reduced.

In yet another embodiment, the outer edge of the conical surface 40, which may be next to the inner edge of the outer surface 30, is located at from about 65% to 85%, or from about 70% to about 80%, such as about 75% of the distance to the outer edge 90 of the connector 250 from the axis 10.

Fig. 7 illustrates views of a male connector 150, according to an embodiment. In an embodiment, the connector 150 includes an outer surface 30 which may or may not be part of the main body 55. According to an embodiment, the outer surface 30 is substantially normal to the axis 10, adapted to abut a complementary outer face of a complementary connector. The connector 150 may further optionally include a central face, substantially normal to and intersecting the axis 10.

Fig. 8 illustrates a view of a connector 350 according to an embodiment. A feature combinable with all other described features/embodiments described herein depicted in Fig. 8 is the conical surface 40 which includes conical sections 400.

For instance, the conical sections may have gaps between them to allow deformation/flexing, especially radially directed deformation/flexing of the conical sections 400, conical surface 40, and/or connector 50, particularly in a connected configuration, i.e. connected to a complementary connector. Having 1, 2, 3, 4, 5, 6 or more conical sections 400 is contemplated. In an embodiment, the conical sections as well as the conical surface are disposed symmetrically about the axis 10, which is normal to the view provided by Fig. 8, and coincides with the center of symmetry.

Fig. 9 illustrates a view of a connector 450 according to an embodiment. A feature which can be combined with all other embodiments described herein and depicted in Fig. 9 is the outer surface 30 which includes sections 300, e.g. arc shaped sections. For instance, the outer surface sections 300 may have gaps between them. Having 1, 2, 3, 4, 5, 6 or more outer surface sections 300 is contemplated. In an embodiment, the outer surface sections 300 as well as the outer surface 30 are disposed symmetrically about the axis 10, which is normal to the view provided by Fig.9, and coincides with the center of symmetry.

Fig. 10 depicts angles 85, 86 associated with misalignment of the clamping assembly and/or bending of the wire guide. The connector(s) and/or clamping assembly, disclosed herein, reduce misalignment and reduce angles 85, 86 due to the stiffness of the connection, particularly in comparison to previously known clamping assemblies such as ones utilizing a swivel joint interface. For instance, a steel wire guide using a swivel joint interface may not be precise enough during the entire cutting operation cycle of the wire saw. A clamping assembly utilizing a connector with an outer surface 30 normal to the axis 10 particularly reduces misalignment.

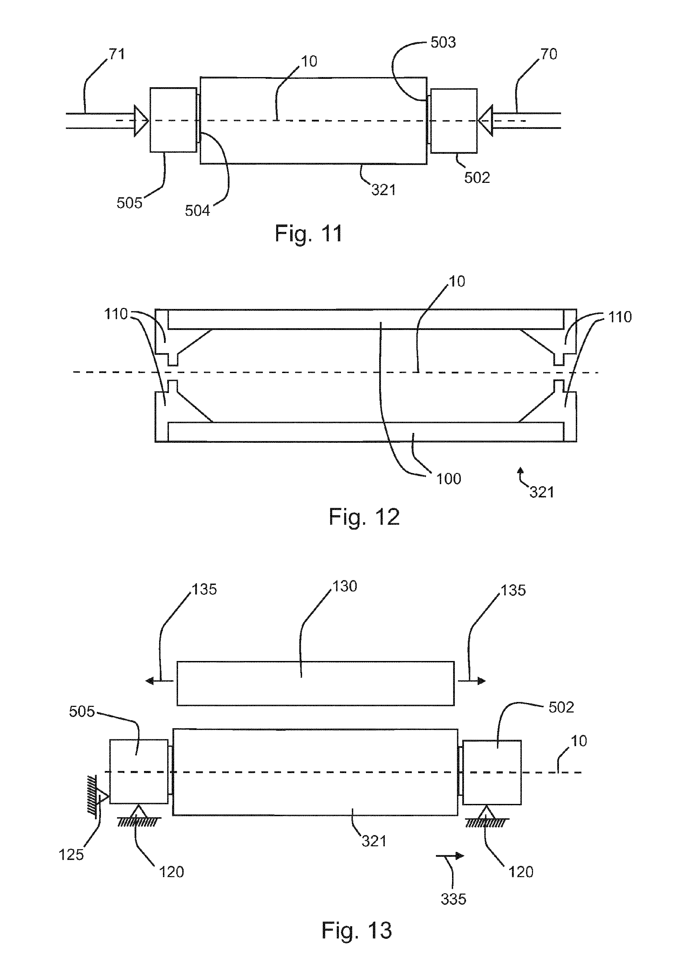

Fig. 11 illustrates a holding mechanism 70, 71 (which is a feature able to be combined with any embodiment herein) for a clamping assembly, according to embodiments described herein. Generally, a clamping assembly includes a holding mechanism 70, 71 such as a pneumatic or hydraulic holding mechanism. Alternatively or additionally, the holding mechanism 70, 71 comprises a screw. For instance, the holding mechanism 70, 71 may allow for engagement and disengagement of the wire guide 321 from the connectors 502, 505, e.g. the holding mechanism allows for movement of a connector, especially a shaft side connector, particularly during engagement and/or disengagement. Alternatively or additionally, the holding mechanism 70, 71 ensures contact between the contact faces on each side of the wire guide, i.e. ensuring contact between the outer and inner connectors (i.e. the shaft side and wire guide side connectors, respectively).

In an embodiment, axial support and torque transmission are separated from radial support, allowing a precise radial and axial run-out (e.g. of the wire and/or wire web). In an embodiment, the holding mechanism 70, 71 applies an axial force of about 200 kN, for example from about 50 kN through about 500 kN, or from about 100 kN through about 300 kN, or from about150 kN through about 250 kN. In comparison, typically the force of the wire on the wire guide is about 25 N for each wire or wire segment, applied perpendicularly to the clamping force, and totals about 100 to 150 kN.

According to an embodiment, a holding mechanism 70, 71, particularly one that includes a screw, typically includes a central hole in the wire guide, which may be threaded.

In an embodiment, which may be combined with any other embodiment described herein, the holding mechanism 70, 71, particularly a holding mechanism that applies an axial force such as an exclusively axial force, holds the connecting assembly in a connected configuration. For example, the holding mechanism 70, 71 applies an axial force which results in an axial contact force between the outer surface 30 of the shaft-side connector 502,505 and the complementary outer surface 31 of the complementary connector 503, 504. Furthermore, the conical surface 40 and the complementary surface 41 of the wire guide 321, may have a contact force with both axial and radial components, the combination of axial and radial components resulting from the conically arranged interface, and which may arise although the holding mechanism 70, 71 applies an axial force, e.g. only an axial force without a radial component.

Fig. 12 illustrates a cross-section of a wire guide 321, comprising a carbon fiber reinforced polymer (CFRP) section 100 and optional flanges 110, according to an embodiment. CFRP has desirable thermal properties such as low and/or controlled thermal expansion, which can possibly reduce or eliminate the need for cooling of the wire guide 321. CFRP can be used for all embodiments described herein. Additionally, CFRP can reduce the moment of inertia and mass of the wire guide 321, and may be particularly useful in combination with the other features described herein.

Flanges 110 may be made of steel, steel alloys, ceramics, and/or CFRP, for example. The flanges may adapted to allow the attachment of inner connections 503, 504, or may alternatively be regarded as the inner connections 503, 504; for example the flanges 110 have an outer surface (which can abut the outer surface of the shaft side connector in a connected configuration), the outer surface being normal to the axis 10, and a surface complementary to the conical surface of the shaft side connectors. Optionally, the wire guide has an outer shell on which the wire grooves 333 are formed, although it is also contemplated that grooves are formed directly on the CFRP section 100.

Fig. 13 illustrates a wire guide assembly in a connected configuration, according to an embodiment, with schematically illustrated supports 120, 125 and also illustrates a silicon ingot 130. The possible thermal expansion and contraction of the ingot 130 is represented by the arrows 135. The expansion (contraction) of the wire guide and/or clamping assembly is illustrated with the lower arrow 335. In the connected configuration, the wire guide 321 is contacted (directly or indirectly) by the connectors 502, 505.

For example, as in Fig. 13, the schematically illustrated supports 120, 125 provide stiffness and support so that dilation of a wire guide, particularly a steel one, would be toward the right, e.g. toward a "free" bearing box; and as according to the illustration of Fig. 13, the dilation of the silicon ingot would be in both (opposite) axial directions, left and right in Fig. 13.

According to embodiments described herein, a CFRP based wire guide, particularly one utilizing a clamping assembly disclosed herein, reduces or eliminates the effects of dilation, e.g. by the CFRP based wire guide having a smaller thermal expansion coefficient and/or one more similar to that of the ingot. A CFRP based wire guide, particularly one utilizing a clamping assembly disclosed herein, therefore can, according to embodiments, reduce deleterious effects of thermal expansion and other alignment factors on the quality (i.e. uniformity, thickness uniformity) of wafers cut with the wire saw.

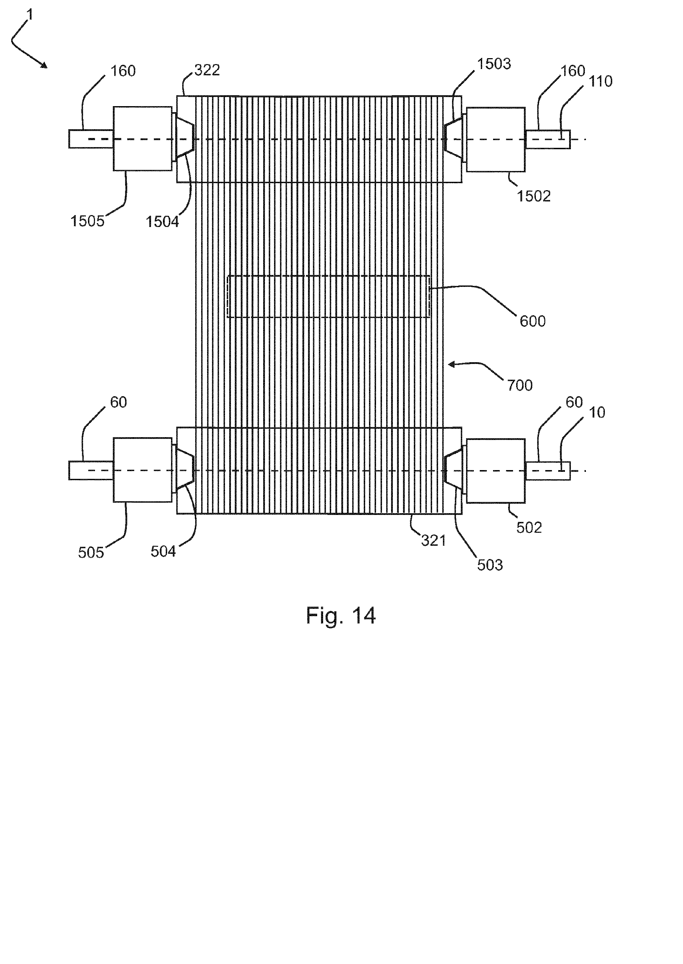

Fig. 14 shows a wire saw 1 including a clamping assembly, according to embodiments described herein, the wire saw for cutting semiconductor or photovoltaics wafers. The non-limiting example illustrated in Fig. 14 shows an ingot 600 to be cut, e.g. wafered with a wire web 700. The wire web 700 is formed by a wire which is guided by two wire guides 321, 322, which are able to rotate about respective axes 10, 110, and are connected to respective shafts 60, 160. Each shaft 60, 160 can have a motor side and an opposite side, for example a bearing box motor side and a bearing box operator side.

Motion of the wire, which coincides with rotational motion of the wire guides, is generally but in some embodiments not exclusively perpendicular to the cutting direction, the cutting direction being defined by the movement of the ingot 600 with respect to the wire web 700, e.g. generally perpendicular to the view afforded by Fig. 14.

The wire saw includes a clamping assembly for connecting to a wire guide, in an embodiment. Usually the wire saw has a plurality of wire guides, e.g. two wire guides 321, 322 illustrated in Fig. 14. A clamping assembly connects the wire saw to the wire guide, although a plurality of clamping assemblies for connecting the wire saw to a respective plurality of wire guides is also contemplated. Features also depicted in Fig. 14 are the respective wire guide side (504, 503) and shaft side connectors (505, 502) of a first clamping assembly and of a second clamping assembly (1504, 1503, 1505, 1502, respectively). Shafts 60, 160 which may be regarded as components of the wire saw and/or components of the clamping assemblies for connecting to the respective wire guides 321, 322 are also depicted in Fig. 14.

Shafts 60, 160 are adapted to rotate about respective axes 10,160, (as do the connectors), the rotations coinciding with rotation of the wire guides 321, 322 and movement of the wire in the wire web 700.

According to aspects of the present disclosure, the clamping assembly as described herein can beneficially be used within the wafer sawing system as described in the following. The wafer sawing system includes an ingot input module, an ingot output module, two or more wire sawing chambers that each include two wire guide cylinders, at least one wire disposed across both of the wire guide cylinders, a support table that is configured to receive a single ingot, and an ingot positioning system that is configured to urge the single ingot disposed on the support table against the at least one wire, and a robot that is configured to transfer the single ingot between the ingot input module, at least one of the two or more wire sawing chambers and the ingot output chamber.

Accordingly, the clamping assembly as described herein can beneficially be used in a method of sawing an ingot as described in the following. The method of sawing an ingot in a wafer sawing system includes transferring a single ingot from an input module to one of a plurality of wire sawing chambers that are positioned relative to a transferring region of a transfer chamber, sawing the single ingot in the wire sawing chamber, wherein sawing the single ingot includes receiving the single ingot from a robot disposed in the transfer chamber, urging the single ingot against a layer of wires disposed across two wire guides, and moving the layer of wires relative to the single ingot, and transferring the sawed ingot from the wire sawing chamber to an output module.

The wafer sawing system as mentioned includes a plurality of wire sawing chambers that each can independently saw an ingot to form thin substrates. The wafer sawing system can be used to form different types of substrates, or wafers, such as solar cell substrates, semiconductor substrates, or other useful substrates from a larger piece, such as an ingot, boule or block. In one configuration, the wafer sawing system is configured to accept a crystalline silicon (c-Si) ingot and perform all of the processing steps needed to form clean and dry substrates. For ease of discussion and to avoid confusion, the phrase ingot will be used herein to broadly signify a larger piece, or un-cut element, that is to be sawed in the wafer sawing system.

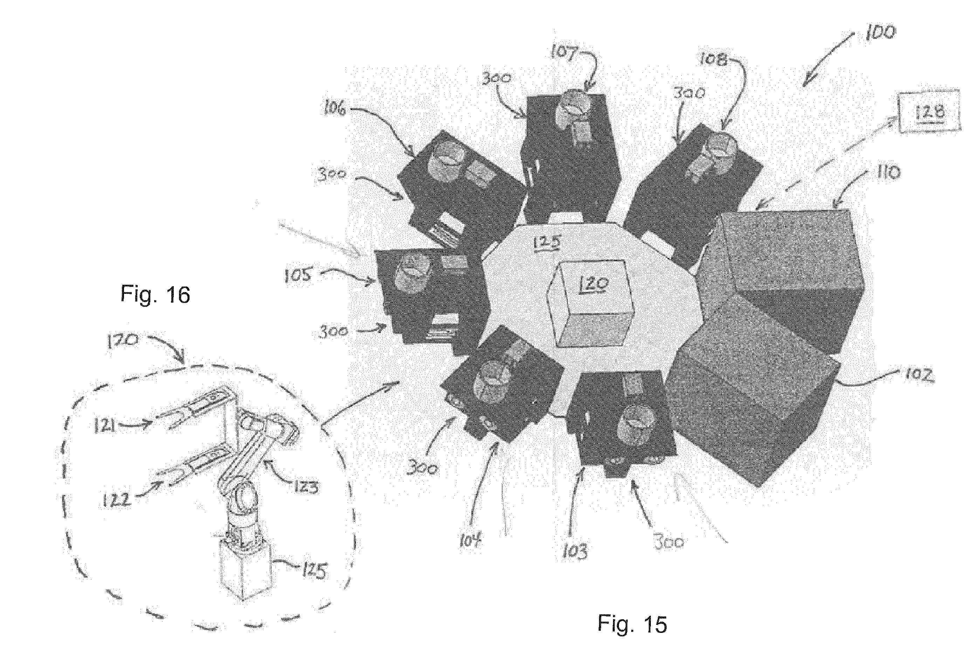

Figure 15 is an isometric view of wafer sawing system 100 that has a plurality of wire sawing chambers 300 disposed on and/or coupled to a central transfer chamber 125. Each sawing chamber may be equipped with at least one, typically exactly one wire saw 1 as described herein, in particular with reference to Fig. 14. In one example, for improved throughput and chamber uptime concerns, the wafer sawing system 100 has at least six wire sawing chambers 300 that can independently saw an ingot. However, fewer or greater numbers of wire sawing chambers 300 may be used. The wafer sawing system 100 generally includes an input module 102, a central transfer chamber 125, a central robot 120, an output module 110, a system controller 128 and a plurality of wire sawing chambers 300 that are disposed in the various processing positions 103-108 formed on the central transfer chamber 125.

In one embodiment, the wire sawing chambers 300 are each mounted on or coupled to the central transfer chamber 125. The wire sawing chambers 300 are typically mounted on or coupled to the central transfer chamber 125 such that the wire sawing chambers 300 are each vibrationally isolated from each other and the central transfer chamber 125 to avoid vibrations created during sawing from affecting the wafer sawing process in one of the other adjacent chambers.

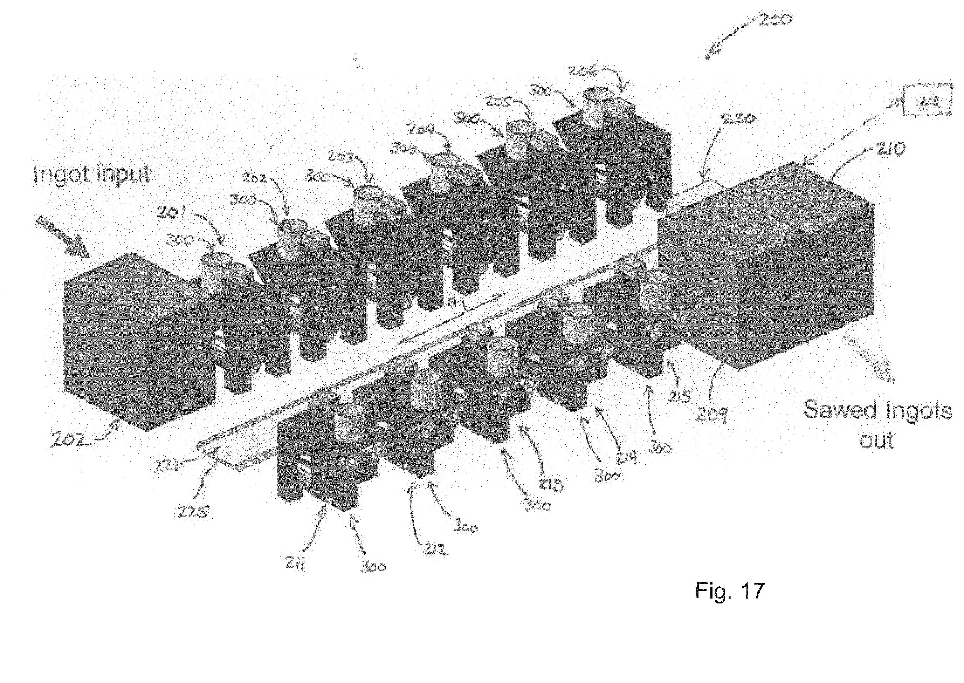

Figure 16 is an isometric view of a robotic device (e.g., central robot 120) that can be coupled to the central transfer chamber 125 to transfer un-processed and processed ingots from the various types of processing chambers disposed in the wafer sawing system 100. During processing, un-cut ingots are transferred from the input module 102 to one of the wire sawing chambers 300 through a transfer region by the central robot 120. Then after being sawed in a wire sawing chamber 300, the sawed ingots are transferred to the output module 110. In one embodiment, a washing station (not shown) (e.g., reference numeral 209 in Figure 17) is disposed in one of the processing positions 103-108, and is used to clean the slurry material from a sawed ingot before it is delivered to the output module 110 by the central robot 120.

The central robot 120 generally includes a conventional robotic device, such as a SCARA robot or a six-axis robot as is shown in Figure 16, which has at least one end-effector 121, 122 that is able to pick-up and transfer an ingot from one chamber to the next in the wafer sawing system 100. In one embodiment, the central robot 120 has at least two end-effectors 121 and 122 that can be used to transfer the ingots through the wafer sawing system 100. In this configuration, the first end-effector 121 can be used to receive un-cut ingots (e.g., clean and dry pieces) from the input module 102, and the second end-effector 122 can be used to transfer sawed ingots (e.g., wet, dirty and fragile elements) from the wire sawing chambers 300 to the output module 110. The second end-effector 122 may contain a supporting tray element (e.g., flexible brush like element (not shown)) that is coupled to the end-effector 122 to support the fragile cut wafers, or substrates, during the transferring process. In one embodiment, a portion of the end-effectors 121 and 122 are configured to engage with the mounting plate 376 (Figure 4), on which the ingot 317 is mounted, to ensure the reliable transfer of the un-cut and sawed ingot through the wafer sawing system 100.

The input module 102 may generally include one or more storage shelves (not shown) that are configured to receive an un-cut type of ingot 317 that has been bonded to a mounting plate 376. In one embodiment, the mounting plate 376 includes a ceramic material that has a plurality of fluid channels (not shown) formed therein to allow a heat exchanging and/or rinsing fluid to flow therein during and/or after the wafer sawing process has been performed on the ingot 317.

The output module 110 generally includes one or more storage shelves (not shown) that are configured to receive an ingot 317 and mounting plate 376 after the wafer sawing process has been performed on the ingot 317. The output module 110 may also include a rinsing device (e.g., DI water delivery system) or rinsing station that is able to keep the sawed ingots wet so that the slurry used in the sawing process will not dry on the processed ingots. In one embodiment, the output module 110 may include a rinsing device/system that cleans the sawed ingots to remove any contamination found on the surface of the formed substrates.

In general, the system controller 128 is used to control one or more components and processes performed in a wafer sawing system. The system controller 128 is generally designed to facilitate the control and automation of the wafer sawing system and particularly includes a central processing unit (CPU) (not shown), memory (not shown), and support circuits (or I/O) (not shown). The CPU may be one of any form of computer processors that are used in industrial settings for controlling various system functions, substrate movement, chamber processes, process timing and support hardware (e.g., sensors, robots, motors, timing devices, etc.), and monitor the processes (e.g., chemical concentrations, processing variables, chamber process time, I/O signals, etc.). The memory is connected to the CPU, and may be one or more of a readily available memory, such as random access memory (RAM), read only memory (ROM), floppy disk, hard disk, or any other form of digital storage, local or remote.

Software instructions and data can be coded and stored within the memory for instructing the CPU. The support circuits are also connected to the CPU for supporting the processor in a conventional manner. The support circuits may include cache, power supplies, clock circuits, input/output circuitry, subsystems, and the like. A program, or computer instructions, readable by the system controller 128 determines which tasks are performable on a substrate. Preferably, the program is software readable by the system controller 128 that includes code to perform tasks relating to monitoring, execution and control of the movement, support, and/or positioning of an ingot within the wafer sawing system, along with the various wafer sawing recipe tasks and various wafer sawing chamber process recipe steps being performed in each of the wire sawing chambers 300 in the wafer sawing system.

Figure 17 is an isometric view of linear type wafer sawing system 200 that has a plurality of wire sawing chambers 300 disposed on and/or coupled to a transfer chamber 225. In general, any number of wire sawing chambers 300 can be disposed on either side of a linear robot 220 to achieve a desired system throughput. In one example, for improved throughput and chamber availability concerns, the wafer sawing system 200 has at least six wire sawing chambers 300 disposed on one side, or evenly distributed on both sides, of the transfer chamber 225. However, fewer or greater numbers of wire sawing chambers 300 may be used.

The wafer sawing system 200 generally includes an input module 202, a transfer chamber 225, a linear robot 220, an output module 210, a system controller 128 and a plurality of wire sawing chambers 300 that are disposed in the various processing positions 203-206 and 212- 215 formed on the transfer chamber 225. In one embodiment, the wire sawing chambers 300 are each mounted on or coupled to the transfer chamber 225. The wire sawing chambers 300 are typically mounted on or coupled to the transfer chamber 225 such that wire sawing chambers 300 are vibrationally isolated from each other and the transfer chamber 225, as discussed above. The input module 202 and output module 210 are generally similar to the input module 102 and the output module 110, respectively, which are discussed above, and thus are not discussed further herein.

The linear robot 220 is used to transfer un-cut ingots from the input module 202 to one of the wire sawing chambers 300, and then after performing the sawing process, the sawed ingots are transferred to the washing station 209 or the output module 210. In one embodiment, the washing station 209 is used to clean and dry the slurry material from the sawed ingot before it is delivered to the output module 210 by the linear robot 220. The robot 220 generally includes a conventional robotic device, such as a SCARA robot or a six-axis robot, that is configured to move along a rail 221 (i.e., direction "M" in Figure 2) that is disposed in a transfer region that spans the length of the wafer sawing system 200. In general, the linear robot 220 has at least one endeffector (not shown), such as end effectors 121, 122 discussed above, that are able to pick-up and transfer an ingot from one chamber to the next in the wafer sawing system 200.

While the foregoing is directed to embodiments of the invention, other and further embodiments of the invention may be devised without departing from the basic scope thereof, and the scope thereof is determined by the claims that follow.

## Claims

1. A clamping assembly for connecting to a cylindrical wire guide (321) of a wire saw for cutting wafers, comprising:
a shaft-side connector (50, 502, 505), adapted to connect to a shaft of a wire saw, the shaft having an axis of rotation (10), wherein
the shaft-side connector (502, 505) includes:
an outer surface (30) which is normal to the axis (10) and
adapted to abut a complementary outer surface (31) of a complementary connector (51, 503, 504) of the wire guide (321), and
a conical surface (40) between the outer surface (30) and the axis (10), the conical surface (40) being disposed symmetrically about the axis (10), and adapted to abut a complementary surface (41) of the wire guide.

2. The clamping assembly of claim 1, wherein the outer surface (30) is planar.

3. The clamping assembly of claim 1 or 2, wherein
the outer surface (30) is adjacent to the conical surface (40) and/or annularly shaped.

4. The clamping assembly of any preceding claim, wherein
a portion of the outer surface (30) is located at a distance of at least about 65%, 70%, 75% or 80% of the radial distance from the axis (10) to a radially outer edge (90) of the shaft-side connector (502, 505).

5. The clamping assembly of any preceding claim, wherein
the conical surface (40) of the shaft-side connector (50) comprises a deformable material.

6. The clamping assembly of any preceding claim, wherein
the conical surface (40) comprises 1, 2, 3, or 4 conical sections.

7. The clamping assembly of any preceding claim, wherein
the shaft-side connector (50) is hollow, and/or the shaft side connector (50, 502, 505) is female.

8. The clamping assembly of any preceding claim, further comprising
a holding mechanism (70, 71) selected from a hydraulic system, a pneumatic system, a screw, and combinations thereof.

9. The clamping assembly of any preceding claim, further comprising the shaft which is connected to the shaft side connector.

10. A clamping assembly for connecting a cylindrical wire guide (321) to a shaft of a wire saw, the wire saw adapted to cut wafers, wherein
the shaft has an axis of rotation (10),
the clamping assembly comprising:
an outer surface (31) which is normal to the axis (10) and adapted to abut a complementary outer surface (30) of a complementary connector (50, 503, 504) of the shaft, and
a conical surface (40) between the outer surface (30) and the axis (10), the conical surface (40) being disposed symmetrically about the axis (10), and
adapted to abut a complementary surface (40) of the complementary connector (50).

11. The clamping assembly of claim 10, wherein
the conical surface (40) is attached to the wire guide (321) and/or the outer surface (30) is adj acent to the conical surface (40).

12. The clamping assembly of claim 10 or 11, wherein
the cylindrical wire guide (321) comprises a carbon fiber reinforced polymer section (100).

13. The clamping assembly of claim 10, 11, or 12, wherein
the outer surface (30) is annularly shaped, the outer surface (30) optionally comprising 1, 2, 3, or 4 sections.

14. A wire saw, having at least one clamping assembly according to any of claims 1-13.

15. A wafer sawing system, comprising:
an ingot input module;
an ingot output module;
two or more wire sawing chambers that each comprise: two wire guide cylinders wherein at least one of the wire guide cylinders is clamped by the clamping assembly according to any of claims 1 to 13;
at least one wire disposed across both of the wire guide cylinders;
a support table that is configured to receive a single ingot;
and an ingot positioning system that is configured to urge the single ingot disposed on the support table against the at least one wire; and
a robot that is configured to transfer the single ingot between the ingot input module, at least one of the two or more wire sawing chambers and the ingot output chamber.
